# EUROPÄISCHE PATENTANMELDUNG

(11) **EP 4 140 626 A1**
(43) Veröffentlichungstag der Anmeldung: **01.03.2023**
(21) Anmeldenummer: 22190868.4
(22) Anmeldetag: 17.08.2022
(51) Int. Cl.: B23C 5/10

(54) **UNIVERSELL EINSETZBARES FRÄSWERKZEUG**

(30) Priorität: 25.08.2021 DE 102021122033
(71) Anmelder: Vratny, Andreas, 85617 Aßling (DE)
(72) Erfinder: Vratny, Andreas, 85617 Aßling (DE)
(74) Vertreter: Beckord & Niedlich Patentanwälte PartG mbB

(57) **Zusammenfassung**

Fräswerkzeug mit zumindest einer Umfangsschneide (1) und mit einer Ausnehmung (24), die zwischen der Spanfläche (8) und dem Nutgrund (9) im Wesentlichen parallel zur Schneidkante (6) und in einem radialen Abstand (A) von der Schneidkante (6) von mindestens 13 bis 20 % des Durchmessers des Fräswerkzeugs verläuft. Die Erfindung betrifft außerdem ein derartiges Fräswerkzeug mit einem Schneidenrücken (5), der entgegen der Drehrichtung (D) an die Schneidkante (6) anschließt und mit einer umfangsseitigen Freifläche (11) des Schneidenrückens (5), die an der Schneidkante (6) anschließt, gekennzeichnet durch eine Ausnehmung (26) am Schneidenrücken (5), die im Wesentlichen parallel zur Schneidkante (6) verläuft und die an die Freifläche (11) unmittelbar anschließt.

## Beschreibung

Die Erfindung betrifft ein Fräswerkzeug für die Bearbeitung insbesondere von Metall mit zumindest einer gewendelten bzw. spiralisierten Umfangsschneide mit einer Schneidkante, mit einer in bestimmungsgemäßer Drehrichtung des Fräswerkzeugs an die Schneidkante angrenzenden, radial eingeschnittenen Spannut mit einem Nutgrund und mit einer an die Schneidkante angrenzenden Schneidenbrust, die eine Scherzone umfasst, mit einer der Schneidenbrust an der Spannut gegenüberliegenden Gegenseite der Spannut, und/oder mit einem Schneidenrücken, der entgegen der Drehrichtung an die Schneidkante anschließt, und mit einer umfangsseitigen Freifläche des Schneidenrückens, die an der Schneidkante anschließt.

Die in das Fräswerkzeug radial eingeschnittene Spannut wird - in einem Querschnitt des Werkzeugs betrachtet - entgegen der Drehrichtung von der Schneidenbrust und in Drehrichtung des Fräswerkzeugs von der Gegenseite der Schneidenbrust begrenzt. Dazwischen liegt der Nutgrund. Er stellt eine Art Sohle der im Querschnitt prinzipiell U-förmigen Spannut und einen Abschnitt der Spannut dar, der in radialer Richtung einer Drehachse bzw. einem unberührten Materialkern des Fräswerkzeugs am nächsten liegt. Die Schneidkante der Umfangsschneide erzeugt spannutseitig eine primäre und eine sekundäre Scherzone im bearbeiteten Material. Sie werden in der Anmeldung auf die entsprechenden Bereiche der Schneidenbrust übertragen und als radial äußere Abschnitte der Schneidenbrust definiert.

Die Umfangsschneide als radial nach außen abragender Abschnitt des Fräswerkzeugs reicht in Drehrichtung betrachtet vom Schneidenrücken über die Schneidkante bis zur Schneidenbrust. Die Umfangsschneide und die Spannut überdecken sich folglich im Bereich der Schneidenbrust einerseits und im Bereich der Gegenseite der Spannut andererseits, weil die Gegenseite der Spannut einen ersten Abschnitt des Schneidenrückens der Umfangsschneide darstellt.

Die DE 10 2017 112 417 A1 beschreibt ein Schneidwerkzeug für periphere Schneidanwendungen, das eine Vielzahl von peripheren Schneidkanten sowie eine Vielzahl von Spannuten umfasst, die zwischen den Schneidkanten angeordnet sind. Jede der Spannuten schließt zumindest eine Oberfläche und zumindest eine Aussparung auf mindestens einer Spannutenoberfläche mit ein. Jede der Aussparungen legt eine innere Aussparung fest, die so angelegt ist, Kühlflüssigkeit während des Betriebs des Schneidwerkzeugs zu speichern. Zumindest eine der Aussparungen ist so dimensioniert und angeordnet, damit die Wärme besser von zumindest den peripheren Schneidkanten abtransportiert wird.

Aufgabe der Erfindung ist es, ein Fräswerkzeug anzugeben, das universell einsetzbar, also für eine Vielzahl an metallischen Materialien geeignet ist.

Diese Aufgabe wird bei dem eingangs genannten Fräswerkzeug erfindungsgemäß durch eine Ausnehmung, Vertiefung oder dergleichen in der Schneidenbrust gelöst, die zwischen der Scherzone und dem Nutgrund liegt. Die Ausnehmung reicht also nicht in die Scherzone hinein, weder in die sekundäre und damit noch weniger in die primäre Scherzone, um dort das Abscheren der Materialspäne nicht unerwünscht zu beeinflussen. Die Ausnehmung nimmt also auf die Schneidwirkung des Fräswerkzeugs keinen unmittelbaren Einfluss. Sie reicht genauso wenig in den Nutgrund hinein, weil sie hier anderenfalls das Umlenken der abfließenden der Späne behindern könnte. Sie liegt also in einem radial inneren Abschnitt der Schneidenbrust. Sie verläuft dort im Wesentlichen parallel zur Schneidkante und hält einen radialen Abstand von der Schneidkante von mindestens 13 bis 20 %, bevorzugt von 15 bis 18% und idealerweise von 16 oder 17 % des Durchmessers des Fräswerkzeugs ein.

Die Ausnehmung hat zwei Ränder, nämlich einen der Schneidkante näher liegenden äußeren Rand und einen der Drehachse des Fräswerkzeugs näher liegenden inneren Rand. Der obige radiale Abstand von der Schneidkante ist die Distanz zwischen der Schneidkante und dem der Schneidkante näher liegenden äußeren Rand der Ausnehmung.

Die obigen Bereichsangaben, beispielsweise "13 bis 20 %", sind in Sinne des mathematischen Intervalls [13%; 20%] zu verstehen. Es umfasst sowohl seine Grenzwerte (13%, 20 %), also auch die dazwischenliegenden Werte 14, 15, 16, 17, 18 und 19 %. Bei kleineren Werkzeugdurchmessern, wie beispielsweise bei Durchmessern von 4 mm, 6 mm oder 8 mm können eher kleinere Bereiche, also eher diejenigen von 15 bis 18 % geeignet sein. Bei größeren Durchmessern dagegen, also insbesondere jenen von 16 mm, 20 mm oder 25 mm, können auch Bereiche von mindestens 13 bis 20 % geeignet sein, also auch Werte von 11 oder 12 % als Untergrenze und Werte von 21 oder 22 % als Obergrenze.

Es hat sich gezeigt, dass die Ausnehmung in der Schneidenbrust das Abfließen der Späne begünstigt, und zwar unabhängig davon, ob das Fräswerkzeug mit oder ohne Kühl-Schmiermittel betrieben wird. Denn in einem Betrieb des Fräswerkzeugs ohne Kühl-Schmiermittel bilden sich in der Ausnehmung Luftkissen bzw. durch die Ausnehmung Luftwirbel aus. Die Luftkissen und -wirbel erleichtern ein Abgleiten der Späne, indem sie die Reibung der Späne und damit eine Wärmeentwicklung reduzieren. Die verwirbelte Luft übernimmt außerdem leichter die Hitze des Fräswerkzeugs, kühlt es insbesondere bei Werkstoffen, die die Bearbeitungswärme nicht annehmen, besser ab, was sich günstig auf die Lebensdauer des Fräswerkzeugs auswirkt.

Ein Betrieb des erfindungsgemäßen Fräswerkzeugs unter Einsatz von Kühl-Schmiermittel dagegen führt zu dessen Ansammlung in der Ausnehmung, wo es einerseits das Abfließen der Späne befördert und andererseits der Kühlung des wärmebelasteten Fräswerkzeugs dient.

Die Anordnung der Ausnehmung begünstigt also sowohl beim Einsatz von Kühl-Schmiermittel als auch bei einem Verzicht darauf einen störungsfreien und verschleißarmen Betrieb des Fräswerkzeugs. Damit lässt sich das erfindungsgemäße Fräswerkzeug zur Bearbeitung einer Vielzahl von verschiedenen, insbesondere metallischen Materialien wie Aluminium, HSS-Stahl oder sogar Titan einsetzen, was ihm eine universelle Anwendung und dem Verwender mangels Werkzeugwechsels eine unterbrechungsfreie Arbeit ermöglicht.

Die oben genannte Aufgabe wird bei dem eingangs genannten Fräswerkzeug erfindungsgemäß außerdem durch eine Ausnehmung am Schneidenrücken gelöst. Auch die Anordnung der Ausnehmung am Schneidenrücken kann grundsätzlich beliebig gewählt werden, kann aber vorzugsweise im Wesentlichen parallel zur Schneidkante verlaufen und an die Freifläche unmittelbar anschließen.

So, wie die Ausnehmung an der Schneidenbrust im Bereich der Spannut liegt, kann sich die Ausnehmung am Schneidenrücken ebenfalls innerhalb der Spannut befinden, nämlich an ihrer der Spannut gegenüberliegenden Gegenseite, dort jedoch in einem radial äußeren Abschnitt. Die Gegenseite mündet radial mit einem regelmäßig nur geringen Winkel gegenüber dem Radius des Fräswerkzeugs in dessen Mantel- oder Umfangsfläche. Ihr umfangnächster Abschnitt kann die Ausnehmung des Schneidenrückens tragen.

Die Ausnehmung kannen grundsätzlich auch an einer im Übrigen unbearbeiteten Umfangsfläche des Fräswerkzeugs angeordnet sein. Nach einer vorteilhaften Ausgestaltung des erfindungsgemäßen Fräswerkzeug kann die umfangsseitige Freifläche am Schneidenrücken ausgebildet sein, die entgegen der bestimmungsgemäßen Drehrichtung des Fräswerkzeugs an der Schneidkante anschließt und an die sich ein gleichsinnig, also in Umfangsrichtung erstreckender Abschnitt mit der am Schneidenrücken angeordneten Ausnehmung anschließt. Die umfangsseitige Freifläche kann folglich zwischen der Schneidkante und der am Schneidenrücken angeordneten Ausnehmung liegen. Sie kann als unbearbeiteter Bestandteil der Umfangsfläche des Fräswerkzeugs ausgebildet sein. Je nach Dimensionierung des Fräswerkzeugs, insbesondere je nach Anzahl seiner Umgangsschneiden und/oder je nach Erstreckung der Ausnehmung in Drehrichtung, kann die Freifläche breiter oder schmaler ausgebildet sein. Mangels Materialabtrag nahe der Schneidkante kann die Freifläche damit zur Stabilität der Schneidkante und der Schneide des Fräswerkzeugs beitragen.

Die Ausnehmung kann grundsätzlich auch an einer radial einwärts geneigten Fläche angeordnet sein. Nach einer weiteren vorteilhaften Ausgestaltung des erfindungsgemäßen Fräswerkzeug kann die Ausnehmung an einer separat ausgebildeten und radial einwärts gerichteten Fläche des Schneidenrückens angeordnet sein. Die Erstreckungsebene einer derartigen sich schneidenparallel wendelnden Fläche, auf der die Ausnehmung angeordnet ist, kann also im Wesentlichen radial verlaufen und somit weitgehend ohne einen Winkel gegenüber dem Radius. Sie liegt damit der Schneidenbrust gegenüber und verläuft gegenüber der Gegenseite der Spannut axial versetzt. Im Betrieb des Fräswerkzeugs mit Kühl-Schmiermittel leitet die der Schneidenbrust gegenüberliegende Ausnehmung das Kühl-Schmiermittel dorthin und an die Schneidkante zurück. Dabei ist es nahezu unerheblich, ob sich die Ausnehmung an dem radial äußeren Abschnitt der Gegenseite oder an einer gegenüber der Gegenseite radial versetzten Fläche befindet. Eine wesentliche Rolle spielt jedenfalls die die Ausrichtung der die Ausnehmung tragenden Fläche, wobei sich die gegenüber der Gegenseite versetzte Anordnung als effizienter erweist. Die am Schneidenrücken radial einwärts gerichtete Ausnehmung jedenfalls führt damit zu einem effizienteren Einsatz des Kühl-Schmiermittels und steigert dessen Wirkung durch mehrmaligen Einsatz.

Nach einer weiteren vorteilhaften Ausgestaltung der Erfindung können die Ausnehmungen eine Reihe von in Drehachsrichtung nebeneinanderliegenden Kavitäten aufweisen. Die Ausnehmungen, also entweder die Ausnehmung an der Schneidenbrust oder die Ausnehmung am Schneidenrücken oder beide, können sich aus einer Kette von sich in Richtung der Drehachse aneinanderreihenden Kavitäten zusammensetzen. Als Reihe von einzelnen Kavitäten können die Ausnehmungen dann für eine stärkere Verwirbelung von Luft und/oder Kühlmittel in Drehachsrichtung und damit für einen besseren Kühleffekt sorgen.

Die Kavitäten können in der Reihe nebeneinander regelmäßig oder unregelmäßig und gleich oder ungleich beabstandet sein und dem Verlauf der Umfangsschneide folgen. Ihre Ausbildung führt zu einer Vergrößerung der Oberfläche, die als Kühlfläche des Fräswerkzeugs und damit dessen verbesserter Abkühlung während des Einsatzes dient. Sind die Kavitäten der Schneidenbrust regelmäßig und gleich beabstandet, verleihen sie dem Fräswerkzeug über seinen achsparallelen Verlauf hinweg jeweils das gleiche Schnittverhalten.

Die Herstellung der Ausnehmungen erfolgt regelmäßig durch Schleifen. Nach einer weiteren vorteilhaften Ausgestaltung der Erfindung können die Kavitäten zumindest einer der Ausnehmungen durch einen Wellenschliff in einem Wechsel von Wellentälern und Wellenbergen ausgebildet sein. Die Kavitäten als Wellentäler einer Ausnehmung gehen also ohne Ausbildung von trennenden Rippen, Stegen o.ä., sondern über - in einem Längsschnitt betrachtet - stetig ansteigende und abfallende Wellenberge ineinander über. Dadurch ergibt sich eine Gestaltung der Kavitäten mit fließenden und kantenfreie Übergängen, die ein Fließen des Kühl-Schmiermittels, der Luft, aber auch der Späne begünstigt.

Nach einer weiteren vorteilhaften Ausgestaltung der Erfindung können die Wellenberge der Kavitäten, die der Abgrenzung der Kavitäten untereinander dienen, unter dem Niveau der im Übrigen unbearbeiteten Schneidenbrust bzw. des unbearbeiteten Schneidenrückens liegen bzw. in die Erstreckungsebene der Schneidenbrust bzw. des Schneidenrückens eingearbeitet sein. Dadurch ergibt sich quasi eine in Drehachsrichtung durchgehende, in sich profilierte Ausnehmung an der Schneidenbrust bzw. am Schneidenrücken dar, die über einen gewellten Ausnehmungsboden verfügt. Die Ausnehmung stellt in Drehachsrichtung eine gute Durchlässigkeit bzw. einen guten Austausch des Kühl-Schmiermittels zwischen den Wellentälern der Kavitäten, ein gutes Strömen der Luft über die Wellenberge hinweg und weitgehend quer dazu ein reibungsarmes Abgleiten der Späne an der Schneidenbrust sicher.

Nach einer weiteren vorteilhaften Ausgestaltung des erfindungsgemäßen Fräswerkzeug können die Kavitäten am Schneidenrücken in einer Richtung radial auswärts bzw. umfangsseitig offen ausgebildet sein. Damit weisen sie keine umfangsseitige Begrenzung auf, so dass sie eine profilierte Kante bzw. einen Wellenrand am Werkzeugumfang bilden. Ohne Einbußen ihrer Wirksamkeit können die Kavitäten dadurch platzsparend angeordnet und einfacher hergestellt werden. Beides dient einer kostengünstigen Herstellung des Fräswerkzeugs.

Die Umfangsgestaltung der Kavitäten ist weitgehend beliebig und orientiert sich im Wesentlichen an ihrer Funktion als Speicher von Kühl-Schmiermittel oder von Luft und/oder als Luftverwirbeler und am Platzangebot für ihre Ausbildung. Nach einer weiteren vorteilhaften Ausgestaltung des erfindungsgemäßen Fräswerkzeug können alle Kavitäten, also sowohl die an der Schneidenbrust als auch jene am Schneidenrücken, eine größere Längserstreckung und eine geringere Breitenerstreckung haben. Ihre Orientierung auf der Schneidenbrust bzw. am Schneidenrücken kann derart ausgerichtet sein, dass ihre Breitenerstreckung im Wesentlichen radial verläuft. Damit erhalten sie eine tangentiale Anordnung, wenn die Längserstreckung der Kavitäten ihre Richtung definiert. Damit ergeben sich schmale, lange Kavitäten, die eine gute Platzausnutzung ermöglichen und gute Herstellungsmöglichkeiten bieten.

Das erfindungsgemäße Fräswerkzeug kann zumindest einer Stirnschneide umfassen. Nach einer weiteren vorteilhaften Ausgestaltung der Erfindung können die Ausnehmungen bis an eine Schneidkante der Stirnschneide bzw. bis an einen Schneidenrücken der Stirnschneide heranreichen. Die erfindungsgemäßen Ausnehmungen können damit ihre vorteilhafte Wirkung auch beim Einsatz der zumindest einen Stirnschneide zeigen.

Die Ausnehmung in der Schneidenbrust des erfindungsgemäßen Fräswerkzeugs bildet zwei in Drehachsrichtung verlaufende Ränder aus. Zur Bestimmung der Lage der Ausnehmung dient der der Schneidkante nähere bzw. zugewandten Rand der Ausnehmung. Ist der Rand infolge Wellenschliffs der Ausnehmung wellenförmig, gilt der geringste Abstand zwischen dem Rand und der Schneidkante als relevant. Nach einer vorteilhaften Ausgestaltung der Erfindung kann der Abstand des Randes von der Schneidkante bei einem Durchmesser des Fräswerkzeugs von 10 mm zwischen 1,5 mm und 1,9 mm, vorzugsweise zwischen 1,7 mm und 1,8 mm liegen. Der Wert des Abstands liegt damit in einem Bereich von 15 % bis 18% des Werkzeugdurchmessers. Bei einem Werkzeugdurchmesser von beispielsweise 20 mm ergeben sich folglich Werte zwischen 3,0 mm und 3,5 mm.

Die folgende Tabelle gibt absolute Werte für Abstände in Abhängigkeit von üblichen Werkzeugdurchmessern von 6 mm bis 25 mm in Einzelnen an. Alle Werte der Abstände liegen in dem obigen Bereich von 15 % bis 18% des Werkzeugdurchmessers. Die Angaben der Bereiche von beispielsweise 0,6 mm bis 0,9 mm sind ebenfalls als mathematische Intervallangabe zu verstehen, nämlich als das Intervall [0,6 mm; 0,9 mm] bzw. als die Werte 0,6 mm, 0,7 mm, 0,8 mm und 0,9 mm:

| Werkzeugdurchmesser | Abstand absolut |
|---|---|
| 4 mm | 0.6 mm - 0.9 mm |
| 6 mm | 0.9 mm - 1.2 mm |
| 8 mm | 1.2 mm - 1.6 mm |
| 10 mm | 1.5 mm - 1.9 mm |
| 12 mm | 1.8 mm - 2.2 mm |
| 16 mm | 2.4 mm - 2.8 mm |
| 20 mm | 3.0 mm - 3.5 mm |
| 25 mm | 3.8 mm - 4.4 mm |

Nach einer weiteren vorteilhaften Ausgestaltung der Erfindung kann das Fräswerkzeug mit einer Ausnehmung an der Schneidenbrust und zugleich mit einer Ausnehmung am Schneidenrücken in einer der obigen Ausführungsmöglichkeiten für die jeweiligen Ausnehmungen ausgebildet sein. Es vereinigt damit die jeweiligen Vorteile in sich und führt zu einem Fräswerkzeug, das hinsichtlich des zu bearbeitenden Materials und hinsichtlich der Verwendung von Kühl-Schmiermittel universell einsetzbar ist.

Das Prinzip der Erfindung wird im Folgenden anhand einer Zeichnung beispielshalber noch näher erläutert. In der Zeichnung zeigen:
- Figur 1:: ein erfindungsgemäßes Fräswerkzeug in einer Seitenansicht,
- Figur 2:: das Fräswerkzeug der Fig. 1 in einer Schrägansicht,
- Figur 3:: einen Schnitt durch das Fräswerkzeug, und
- Figur 4:: einen vergrößerten Ausschnitt aus Figur 3.

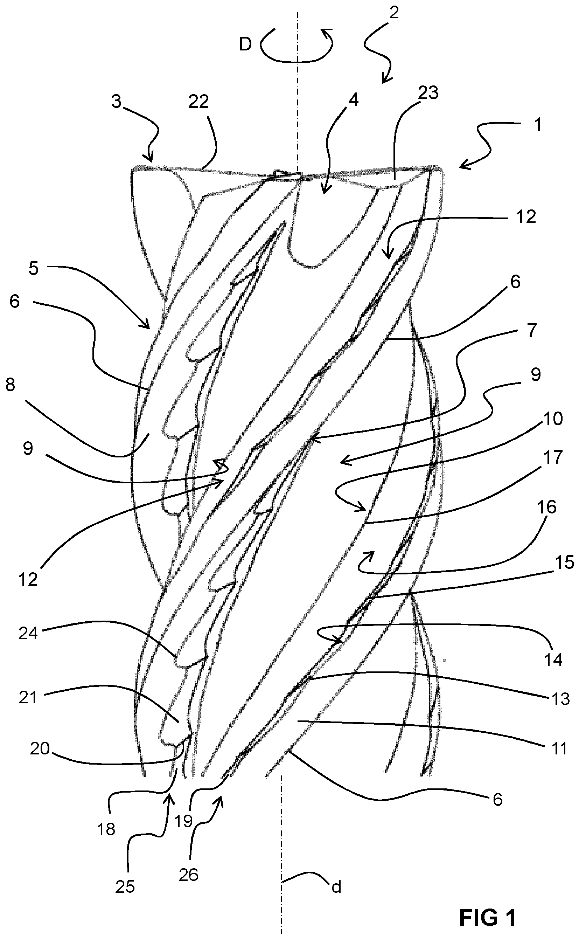

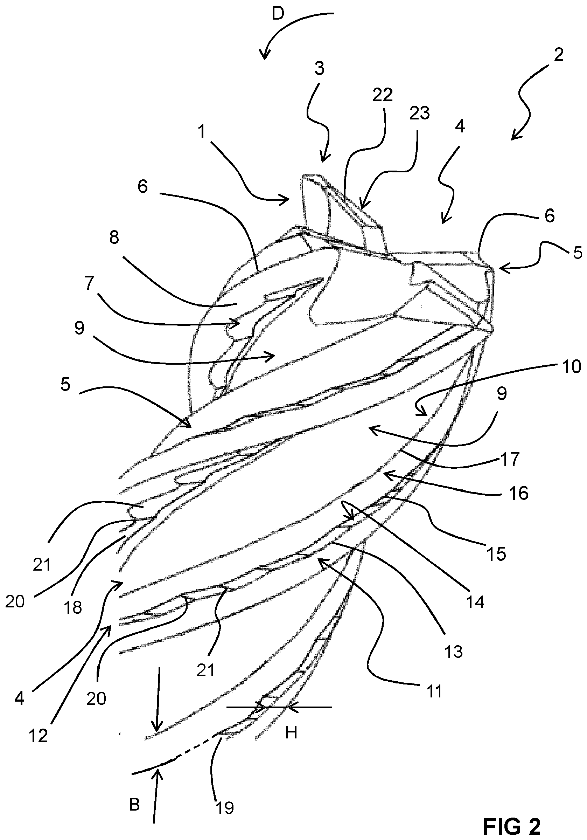

Ein erfindungsgemäßes, grundsätzlich drehzylindrisches Fräswerkzeug verfügt in an sich bekannter Weise über einen nicht dargestellten Schaftabschnitt zum drehbaren Einspannen des Fräswerkzeugs im Betrieb und über einen in den Figuren 1, 2 abschnittsweise dargestellten, dem Schaftabschnitt gegenüberliegenden Fräsabschnitt. Der Fräsabschnitt hat vier über seinen Umfang spiralförmig verlaufende Umfangsschneiden 1, die an einer dem Schaftabschnitt gegenüberliegenden Stirnseite 2 in vier radial und geradlinig verlaufende Stirnschneiden 3 übergehen. Zwischen jeder Umfangsschneide 1 ist eine Spannut 4 radial eingeschnitten, die in Richtung der Drehachse d (Fig. 1) des Fräswerkzeugs ebenfalls einen spiralförmigen Verlauf nimmt.

Jede Umfangsschneide 1 stellt einen radial nach außen abragenden Abschnitt des Fräswerkzeugs dar und reicht in Drehrichtung D betrachtet von einem sich weitgehend in Umfangsrichtung erstreckenden Schneidenrücken 5 über eine Schneidkante 6 bis zu einer radial einwärts gerichteten Schneidenbrust 7. Die Schneidenbrust 7 trägt an ihrem radial äußeren Abschnitt unmittelbar angrenzend an die Schneidkante 6 eine Scherzone 8.

Jede Spannut 4 setzt sich aus der Schneidenbrust 7 der in Drehrichtung vor ihr liegenden Umfansgschneide 1, einem Nutgrund 9 und einer der Schneidenbrust 7 gegenüberliegenden Gegenseite 10 zusammen. Der Nutgrund 9 ist radial am tiefsten in das Fräswerkzeug eingeschnitten und liegt der Drehachse d am nächsten. Die Gegenseite 10 liegt am Schneidenrücken 5 der in Drehrichtung nächsten Umfangsschneide 1 an.

Jede Umfangsschneide 1 und jede ihr in Drehrichtung D folgende Spannut 4 überlappen sich folglich teilweise, und zwar im Bereich der Schneidenbrust 7. Jede Spannut 4 und jede ihr in Drehrichtung D folgende Umfangsschneide 1 überdecken sich wiederum im Bereich der Gegenseite 10, die einen ersten Abschnitt des Schneidenrückens 5 der folgenden Umfangsschneide 1 darstellt.

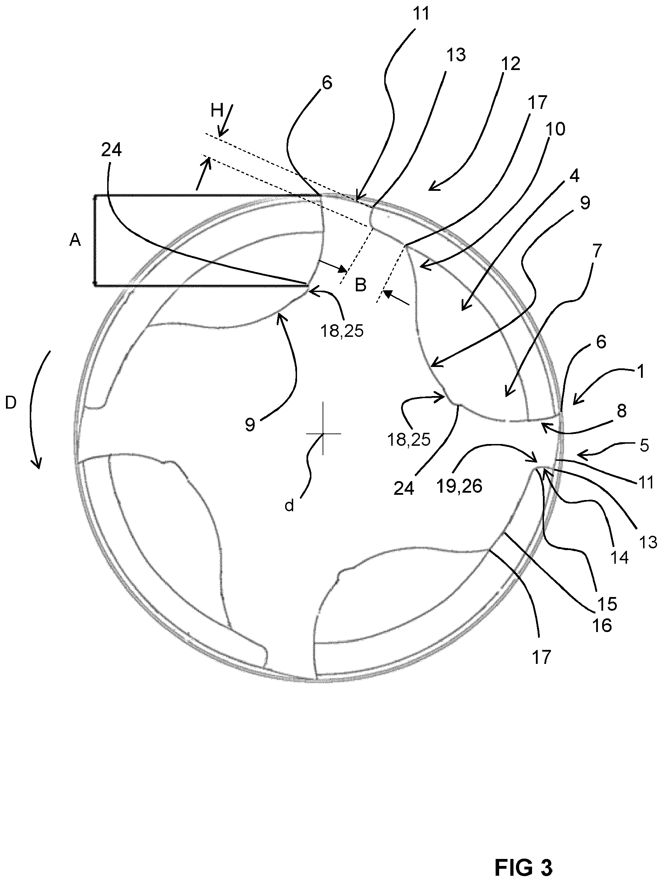

Jeder Schneidenrücken 5 des dargestellten Fräswerkzeugs verfügt außerdem über eine entgegen der Drehrichtung d an die Schneidkante 6 angrenzende Freifläche 11. Sie stellt eine mantelnahe Fläche des Fräswerkzeugs dar, die vom größten Radius an der Schneidkante 6 ausgehend mit geringfügig abnehmendem Radius radial einwärts geneigt ist. Entgegen der Drehrichtung D folgt der Freifläche 11 eine Stufe 12, die an einer wellenförmigen Freiflächenkante 13 in eine radial einwärts gerichtete Setzfläche 14 und an einer wellenförmigen Setzkante 15 in eine umfangsparallel verlaufende Stufenfläche 16 übergeht. Die Stufenfläche 16 stößt an einer Stufenkante 17 an die Gegenseite 10 der entgegen der Drehrichtung D vorausgehenden Spannut 4 an. Die Ausbildung der Stufe 12 führt dazu, dass die Stufenfläche 16 parallel, aber um eine Höhe H (Fig. 2, 3) der Setzfläche 14 radial einwärts versetzt gegenüber der Freifläche 11 verläuft. Die Setzfläche 14 dagegen verläuft in Umfangsrichtung um eine Breite B der Stufenfläche 16 parallel versetzt gegenüber der Gegenseite 10 bzw. zumindest gegenüber einem radial äußeren Abschnitt der Gegenseite 10.

Sowohl die Schneidenbrust 7 als auch die Setzfläche 14 tragen erfindungsgemäße Kavitäten 18, 19 (Fig. 1, 2): Die Schneidenbrust 7 hat vorderseitige Kavitäten 18, die Setzfläche 14 trägt rückseitige Kavitäten 19. Sie sind durch einen Wellenschliff erzeugt. Der Wellenschliff führt zu tiefer eingesenkten Wellentälern 21 und zu weniger tief eingesenkten Wellenkämmen 20. Auch die Wellenkämme 20 liegen abgesenkt gegenüber einer Erstreckungsfläche der Schneidenbrust 7. Die vorderseitigen Kavitäten 18 sind in die Erstreckungsfläche der Schneidenbrust 7 vollständig eingelassen und damit allseitig von der Schneidenbrust 7 umgeben und bilden damit zusammen eine in Drehachsrichtung gewendelt verlaufende Ausnehmung 25. Der Wellenschliff bzw. der wellenförmig geschliffene Boden der Ausnehmung 25 führt zu einem wellenförmigen Rand 24, der der Schneidkante 6 näher liegt.

Der Wellenschliff bedeckt die Setzfläche 14 vollständig mit Wellentälern 21 und Wellenkämmen 20. Die Setzfläche 14 erhält durch den Wellenschliff eine vollständig gewellte Oberfläche, die radial einwärts orientiert ist und sich als Ausnehmung 26 spiralförmig oder schraubenförmig um die Drehachse d windet. Dadurch ergibt sich die ebenfalls wellenförmig verlaufende Setzkante 15 und die umfangsseitig gut zu erkennende wellenförmige Freiflächenkante 13. Die Wellentäler 21 auf der Setzfläche 14 grenzen radial einwärts an die Stufenfläche 16 an und sind gegenüber, also radial auswärts bzw. umfangsseitig offen.

Die Kavitäten 18, 19 reichen jeweils bis an die Stirnseite 2 heran: die vorderseitigen Kavitäten 18 in der Schneidenbrust 7 verlaufen bis an eine Schneidkante 22 der Stirnschneide 3 heran und dort aus. Die rückseitigen Kavitäten 19 in der Setzfläche 14 reichen bis in einen Schneidenrücken 23 der Stirnschneide 3 hinein.

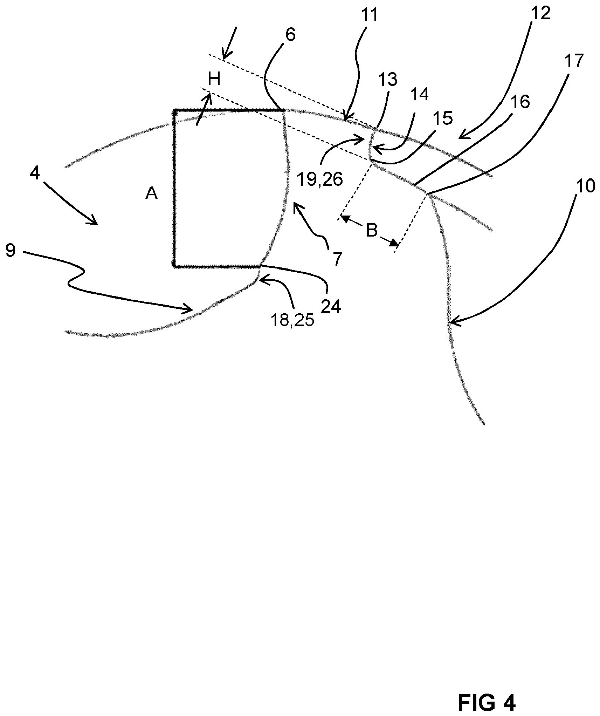

Die Schnittansichten der Figuren 3, 4 verdeutlichen insbesondere die Lage der Kavitäten 18 bzw. der Ausnehmung 25 in der Schneidenbrust 7: Die Schneidenbrust 7 wölbt sich von der Schneidkante 6 ausgehend radial einwärts bis zum Nutgrund 9. An ihrem der Schneidkante 6 zu gewandten Rand befindet sich die Scherzone 8, die sich in eine primäre Scherzone unmittelbar an der Schneidkante 6 und radial einwärts in eine sekundäre Scherzone gliedert. Die Spanbildung geschieht zunächst in der primären Scherzone unter plastischer Verformung von Material und daher unter Wärmebildung. Die Spanbildung setzt sich in der sekundären Scherzone fort, bevor der Spahn schließlich in den Nutgrund 9 gelangt. Die höchste Wärmebildung muss dabei nicht zwingend nahe der Schneidkante 6 in der primären Scherzone stattfinden, sondern kann sich auch in der sekundären Scherzone aufbauen.

Die Ausbildung des Spans und sein Ablaufen in der Scherzone 8 sollen nicht gestört werden. Die erfindungsgemäße Ausnehmung 25 liegt daher von der Scherzone 8 aus betrachtet radial einwärts auf bzw. in der Schneidenbrust 7. Andererseits reicht sie nicht bis in den Nutgrund 9 hinein, um dort das Umlenken des Spans nicht zu stören, sondern liegt zwischen der Scherzone 8 und dem Nutgrund 9. Ihr wellenförmiger Rand 24 nimmt in Abhängigkeit vom Werkzeugdurchmesser einen bestimmten idealen Abstand A ein. Bei einem Werkzeugdurchmesser von beispielsweise 4 mm liegt der ideale Abstand A des Randes 24 zur Schneidkante 6 in einem Bereich von 0,6 mm, 0,7 mm, 0,8 mm oder 0,9 mm. Dies entspricht einem Abstand A in % zum Werkzeugdurchmesser von 4 mm in einem Bereich von 15 bis 18 %. Der Abstand A bemisst sich als geringste Distanz der Schneidkante 6 zum wellenförmigen Rand 24.

Bei einem Werkzeugdurchmesser von 25 mm liegt der Abstand A ebenfalls in einem Bereich von 15 bis 18 % des Werkzeugdurchmessers und kann als Werte 3,8 mm bis 4,4 mm annehmen.

In der folgenden Tabelle sind die Abstände A in Abhängigkeit von üblichen Werkzeugdurchmessern von 6 mm bis 25 mm angegeben. Die Angaben der Bereiche von beispielsweise 0,6 mm bis 0,9 mm der zweiten Spalte der Tabelle ist dabei als mathematische Intervallangabe zu verstehen, nämlich als das Intervall [0,6 mm; 0,9 mm]. Es umfasst also die Intervallgrenzen 0,6 mm und 0,9 mm und die dazwischen liegenden Werte, also die Werte 0,7 mm und 0,8 mm. Entsprechend sind auch die Werte der letzten Spalte als die Werte 15%, 16%, 17% und 18% zu verstehen.

| Werkzeugdurchmesser | Abstand A (Schneidkante 6 zu Rand 24) absolut | Abstand A prozentual zum Werkzeugdurchmesser |
|---|---|---|
| 4 mm | 0.6 mm - 0.9 mm | 15% - 18% |
| 6 mm | 0.9 mm - 1.2 mm | 15% - 18% |
| 8 mm | 1.2 mm - 1.6 mm | 15% - 18% |
| 10 mm | 1.5 mm - 1.9 mm | 15% - 18% |
| 12 mm | 1.8 mm - 2.2 mm | 15% - 18% |
| 16 mm | 2.4 mm - 2.8 mm | 15% - 18% |
| 20 mm | 3.0 mm - 3.5 mm | 15% - 18% |
| 25 mm | 3.8 mm - 4.4 mm | 15% - 18% |

Die obige Tabelle zeigt einen durchgängig optimalen Abstand A in einem Bereich von 15 bis 18 % des Werkzeugdurchmessers. Dies schließt jedoch angrenzende Werte für den optimalen Abstand A, nämlich von 13%, 14%, oder 19% und 20 % des Durchmessers des Werkzeugs, und damit größere oder geringere Abstände A, insbesondere bei größeren Durchmessern, nicht aus:
Im Betrieb reduzieren die vorderseitigen Kavitäten 18 die Reibung von Materialspänen, die nach dem Abscheren an der Schneidkante 6 und dem Abschälen in der Scherzone 8 in die Spannut 4 gelangen. Dort reiben sie an der Schneidenbrust 7 unterhalb der Scherzone 8 entlang, bis sie im Nutgrund 9 in einer Radialebene betrachtet umgelenkt werden, um an der Gegenseite 10 entlang aus der Spannut 4 ausgeworfen zu werden. Das Reiben an der Schneidenbrust 7 unterhalb der Scherzone 8 lässt sich durch Kühl-Schmiermittel reduzieren. Die Kavitäten 18 füllen sich damit, halten es vor und bilden ein Kissen daraus, auf dem die Materialspäne besser abgleiten. Außerdem kühlen die gefüllten Kavitäten 18 das Fräswerkzeug besser, weil sie mehr Volumen an Kühl-Schmiermittel bzw. jenes länger mit dem Fräswerkzeug in Kontakt halten.

Ohne den Einsatz von Kühl-Schmiermittel bilden sich in den Kavitäten 18 Luftkissen mit einem ähnlichen Effekt der Reibungsreduzierung, die weniger Bearbeitungswärme entstehen lässt, und einem Kühleffekt, der der dennoch auftretenden Wärmeentwicklung entgegenwirkt.

Die Kavitäten 18, 19 führen außerdem zu einer Vergrößerung der Oberfläche des Fräswerkzeugs. Es erhält durch das Einbringen der Kavitäten 18, 19 eine größere Oberfläche zur Abgabe von Wärme.

Die rückseitigen Kavitäten 19 wirken beim Einsatz von Kühl-Schmiermittel zudem als eine Art fluidischer Reflektor: Kühl-Schmiermittel, das im Betrieb von der Schneidenbrust 7 abspritzt, werfen die rückseitigen Kavitäten 19 zurück in Richtung der Schneidenbrust 7, damit es dort erneut wirken kann. Die rückseitigen Kavitäten 19 tragen damit zu einem effizienteren Einsatz von Kühl-Schmiermittel bei, was der Schneidleistung des Fräswerkzeugs und dessen Lebensdauer zugute kommt.

Da es sich bei dem vorhergehenden, detailliert beschriebenen Fräswerkzeug um ein Ausführungsbeispiel handelt, kann es in üblicher Weise vom Fachmann in einem weiten Umfang modifiziert werden, ohne den Bereich der Erfindung zu verlassen. Insbesondere können die Anzahl und die konkreten Ausgestaltungen der Umfangsschneiden in anderer Form als in der hier beschriebenen erfolgen. Auch können die Stirnschneiden oder die Stirnseite des Fräswerkzeugs in einer anderen Form ausgestaltet werden, wenn dies aus Verwendungs- oder Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Umfangsschneide
- 2: Stirnseite
- 3: Stirnschneide
- 4: Spannut
- 5: Schneidenrücken
- 6: Schneidkante
- 7: Schneidenbrust
- 8: Scherzone
- 9: Nutgrund
- 10: Gegenseite
- 11: Freifläche
- 12: Stufe
- 13: Freifächenkante
- 14: Setzfläche
- 15: Setzkante
- 16: Stufenfläche
- 17: Stufenkante
- 18: vorderseitige Kavität
- 19: rückseitige Kavität
- 20: Wellenberg, Wellenkamm
- 21: Wellental
- 22: Schneidkante
- 23: Schneidenrücken
- 24: schneidenseitiger Rand der Kavität 18
- 25: Ausnehmung
- 26: Ausnehmung

- B: Breite der Stufenfläche 16
- D: Drehrichtung
- d: Drehachse
- H: Höhe der Setzfläche 14
- A: Abstand

## Patentansprüche

1. Fräswerkzeug für die Bearbeitung insbesondere von Metall mit zumindest einer Umfangsschneide (1) mit einer Schneidkante (6), mit einer in bestimmungsgemäßer Drehrichtung (D) des Fräswerkzeugs an die Schneidkante (6) angrenzenden Spannut (4) mit einem Nutgrund (9) und mit einer an die Schneidkante (6) angrenzenden Schneidenbrust (7) der Spannut (4), die eine Scherzone (8) umfasst, **gekennzeichnet durch** eine Ausnehmung (24) in der Schneidenbrust (7), die zwischen der Scherzone (8) und dem Nutgrund (9) im Wesentlichen parallel zur Schneidkante (6) und in einem radialen Abstand (A) von der Schneidkante (6) von mindestens 13 bis 20 %, bevorzugt von 15 bis 18 % und idealerweise von 16 oder 17 % des Durchmessers des Fräswerkzeugs verläuft.

2. Fräswerkzeug für die Bearbeitung insbesondere von Metall mit zumindest einer Umfangsschneide (1) mit einer Schneidkante (6), mit einer in bestimmungsgemäßer Drehrichtung (D) des Fräswerkzeugs an die Schneidkante (6) angrenzenden Spannut (4) mit einem Nutgrund (9), mit einer an die Schneidkante (6) angrenzenden Schneidenbrust (7) und mit einer der Schneidenbrust (7) gegenüberliegenden Gegenseite (10) der Spannut (4), mit einem Schneidenrücken (5), der entgegen der Drehrichtung (D) an die Schneidkante (6) anschließt und mit einer umfangsseitigen Freifläche (11) des Schneidenrückens (5), die an der Schneidkante (6) anschließt, **gekennzeichnet durch** eine Ausnehmung (26) am Schneidenrücken (5), die im Wesentlichen parallel zur Schneidkante (6) verläuft und die an die Freifläche (11) unmittelbar anschließt.

3. Fräswerkzeug nach Anspruch 2, **dadurch gekennzeichnet, dass** die Ausnehmung (26) an einer radial einwärts gerichteten Fläche (10; 14) des Schneidenrückens (5) angeordnet ist.

4. Fräswerkzeug nach einem der obigen Ansprüche, **dadurch gekennzeichnet, dass** die Ausnehmungen (25; 26) eine Reihe von (in Drehachsrichtung) nebeneinanderliegenden Kavitäten (18; 19) aufweisen.

5. Fräswerkzeug nach dem obigen Anspruch, **dadurch gekennzeichnet, dass** die Kavitäten (18; 19) durch einen Wellenschliff in einem Wechsel von Wellentälern (21) und Wellenbergen (20) ausgebildet sind.

6. Fräswerkzeug nach Anspruch 5, **dadurch gekennzeichnet, dass** die Wellenberge (20) der Kavitäten (18; 19) unter dem Niveau der Schneidenbrust (7) liegen.

7. Fräswerkzeug nach einem der Ansprüche 4 bis 6, **dadurch gekennzeichnet, dass** die Kavitäten (19) der Ausnehmung (26) am Schneidenrücken (5) in einer Richtung radial auswärts offen ausgebildet sind.

8. Fräswerkzeug nach dem obigen Anspruch, **dadurch gekennzeichnet, dass** die Kavitäten (18; 19) eine größere Längserstreckung und eine geringere Breitenerstreckung haben und dass die Orientierung der Kavitäten (18; 19) auf der Schneidenbrust (7) bzw. am Schneidenrücken (5) derart ausgerichtet ist, dass ihre Breitenerstreckung im Wesentlichen radial verläuft.

9. Fräswerkzeug nach einem der obigen Ansprüche mit zumindest einer Stirnschneide (3), **dadurch gekennzeichnet, dass** die Ausnehmungen (25; 26) bis an eine Schneidkante (22) der Stirnschneide (3) bzw. bis an einen Schneidenrücken (5) der Stirnschneide (3) heranreichen.

10. Fräswerkzeug nach einem der obigen Ansprüche mit einem der Schneidkante (6) zugewandten Rand (24) der Ausnehmung (25), **dadurch gekennzeichnet, dass** ein Abstand (L3) des Randes (24) von der Schneidkante (6) bei einem Durchmesser des Fräswerkzeugs von 10 mm zwischen 1,5 mm und 1,9 mm, vorzugsweise zwischen 1,7 mm und 1,8 mm liegt.

11. Fräswerkzeug mit einer Ausnehmung (25) an der Schneidenbrust (7) nach Anspruch 1 und mit einer Ausnehmung (26) am Schneidenrücken (14) nach Anspruch 2, insbesondere mit Merkmalen der jeweils darauf bezogenen Unteransprüche.
